# EUROPEAN PATENT SPECIFICATION

(11) **EP 3 875 936 B1**
(45) Date of publication and mention of the grant of the patent: **10.05.2023**
(21) Application number: 21159615.0
(22) Date of filing: 26.02.2021
(51) Int. Cl.: G01M 13/00, G01M 99/00

(54) **STATE DETERMINATION DEVICE, DOOR CONTROL DEVICE, STATE DETERMINATION METHOD, AND STATE DETERMINATION PROGRAM**
ZUSTANDSBESTIMMUNGSVORRICHTUNG, TÜRSTEUERUNGSVORRICHTUNG, ZUSTANDSBESTIMMUNGSVERFAHREN UND ZUSTANDSBESTIMMUNGSPROGRAMM
DISPOSITIF DE DÉTERMINATION D'ÉTAT, DISPOSITIF DE COMMANDE DE PORTE, PROCÉDÉ DE DÉTERMINATION D'ÉTAT, PROCÉDÉ ET PROGRAMME DE DÉTERMINATION D'ÉTAT

(30) Priority: 04.03.2020 JP 2020036997
(43) Date of publication of application: 08.09.2021
(73) Proprietor: NABTESCO CORPORATION, Chiyoda-ku Tokyo 102-0093 (JP)
(72) Inventor: TANABE, Kazuo, Chiyoda-ku, Tokyo 102-0093 (JP); MAKIHIRA, Ikuo, Chiyoda-ku, Tokyo 102-0093 (JP)
(74) Representative: Grünecker Patent- und Rechtsanwälte PartG mbB

(56) References cited:
- EP-A1- 2 565 142
- WO-A1-2021/214075
- DE-A1-102020 205 217
- GB-A- 2 409 911
- US-A1- 2008 179 143
- US-A1- 2016 340 149

## Description

The present invention relates to a state determination device, a door control device, a state determination method, and a state determination program.

GB 2 409 911 A discloses a motor driving a door wherein a force sensor detecting a force of the motor. By means of the force sensor an excess force can be determined.

A state determination device described in Japanese Laid-Open Patent Publication No. 2017-149290 determines the state of a bearing of a railway vehicle by monitoring the bearing and detecting an abnormality in the bearing. This state determination device achieves both early detection of failure of the bearing and prevention of false detections regardless of the usage of the bearing in the railway vehicle.

The state determination device described in Japanese Laid-Open Patent Publication No. 2017-149290 determines the state of the bearing of the railway vehicle. However, there is no state determination device that determines the state of a transmission mechanism of a door device of a railway vehicle, so that it is desired to provide a state determination device determining the state of the transmission mechanism of the door device of the railway vehicle.

The present invention has been made in view of the above, and an object of the present invention is to provide a state determination device, a door control device, a state determination method, and a state determination program for determining the state of a transmission mechanism of a door device of a railway vehicle.
Above object is achieved by a device according to claim 1, a state determination method according to claim 10, and a state determination program according to claim 11. Specific embodiments are laid down in the dependent claims.

A state determination device according to one aspect disclosed herein includes: a first acquisition unit obtaining driving force information regarding a driving force of a drive unit that drives a door; a second acquisition unit obtaining a load on a transmission mechanism that transmits the driving force of the drive unit to the door; and a determination unit determining whether there is deterioration of a transmission path of the driving force from the drive unit to the door based on the driving force information obtained by the first acquisition unit and the load obtained by the second acquisition unit.

As deterioration of the transmission mechanism that transmits the driving force to the door progresses, the load on the transmission mechanism is likely to have a value different from the driving force information regarding the driving force. With the above described configuration, by obtaining the driving force information and the load on the transmission mechanism, it is possible to determine the state of the transmission mechanism based on the obtained driving force information and the load on the transmission mechanism.

In the state determination device, the determination unit preferably determines the state of the transmission mechanism based on the difference between an upstream load and a downstream load on a transmission path of the driving force that are obtained by the second acquisition unit.

With this configuration, by obtaining the difference between the upstream load and the downstream load in the driving force transmission path, it is possible to determine whether the transmission path of the transmission mechanism is deteriorated. Further, by narrowing the distance between the upstream load detection position and the downstream load detection position, it is possible to identify a deteriorated portion.

In the state determination device, the determination unit preferably determines the state of the transmission mechanism based on the difference between a load at a portion where directly receives the driving force of the drive unit and a load at a portion of the transmission path of the driving force other than the portion where directly receives the driving force.

With this configuration, it is possible to determine whether there is deterioration of the transmission path of the driving force by obtaining the difference between a load at a portion where directly receives the driving force of the drive unit and a load at a portion of the transmission path of the driving force other than the portion where directly receives the driving force. Further, since the portion where directly receives the driving force of the drive unit can be used as a reference, the determination can be made according to the change in load generated by the input.

In the state determination device, the determination unit preferably determines the state of the transmission mechanism based on a change in load obtained at a same location by the second acquisition unit.

With this configuration, it is possible to determine whether there is deterioration of the transmission path of the driving force in consideration of change in load at the same location, that is, the change overtime. By obtaining the change in load at the same location, it is possible to determine whether there is deterioration at that location.

In the state determination device, the determination unit preferably determines the state of the transmission mechanism based on loads obtained at a same location by the second acquisition unit under same conditions.

With this configuration, it is possible to determine whether there is deterioration of the transmission path of the driving force by obtaining a change in load at the same location under the same conditions, that is, the change over time and the load under the same conditions.

In the state determination device, a detection unit detecting the load is preferably provided on each of an output portion of the drive unit, a bracket connecting the output portion and the door, and the door. With the above configuration, since the detection units are provided on the members constituting the driving force transmission path, it is possible to determine which of them is deteriorated.

In the state determination device, the determination unit preferably determines the state of the transmission mechanism when the door is closed.

With this configuration, although lateral pressure may be applied to the door when the door is opened, the determination can be performed without the effect of the lateral pressure by performing the determination when the door is closed.

As for the state determination device, the door may be a first door that is one of a plurality of doors provided in a same vehicle, the second acquisition unit may also obtain a load on a transmission mechanism that transmits a driving force to a second door that is another one of the plurality of doors, and the determination unit preferably determines the state of the transmission mechanism transmitting the driving force to the first door based on the load on the transmission mechanism transmitting the driving force to the first door and the load on the transmission mechanism transmitting the driving force to the second door that are obtained by the second acquisition unit. The state determination device may further include a control unit controlling the drive unit. With this configuration, the state of the transmission mechanism transmitting the driving force to the first door can be determined by comparing the load on the transmission mechanism transmitting the driving force to the first door with the load on the transmission mechanism transmitting the driving force to the second door.

A door control device according to another aspect disclosed herein includes: a first acquisition unit obtaining driving force information regarding a driving force of a drive unit that drives a door; a second acquisition unit obtaining a load on a transmission mechanism that transmits the driving force of the drive unit to the door; a determination unit determining whether there is deterioration of a transmission path of the driving force from the drive unit to the door based on the driving force information obtained by the first acquisition unit and the load obtained by the second acquisition unit; and a control unit controlling the drive unit.

As deterioration of the transmission mechanism that transmits the driving force to the door progresses, the load on the transmission mechanism is likely to have a value different from the driving force information regarding the driving force. With the above described configuration, by obtaining the driving force information and the load on the transmission mechanism, it is possible to determine the state of the transmission mechanism based on the obtained driving force information and the load on the transmission mechanism.

A state determination method according to another aspect disclosed herein includes: a first acquisition step of obtaining driving force information regarding a driving force of a drive unit that drives a door; a second acquisition step of obtaining a load on a transmission mechanism that transmits the driving force of the drive unit to the door; and a determination step of determining whether there is deterioration of a transmission path of the driving force from the drive unit to the door based on the driving force information obtained in the first acquisition step and the load obtained in the second acquisition step.

As deterioration of the transmission mechanism that transmits the driving force to the door progresses, the load on the transmission mechanism is likely to have a value different from the driving force information regarding the driving force. With the above described method, by obtaining the driving force information and the load on the transmission mechanism, it is possible to determine the state of the transmission mechanism based on the obtained driving force information and the load on the transmission mechanism.

A state determination program according to yet another aspect disclosed herein causes a computer to perform: a first acquisition step of obtaining driving force information regarding a driving force of a drive unit that drives a door; a second acquisition step of obtaining a load on a transmission mechanism that transmits the driving force of the drive unit to the door; and a determination step of determining whether there is deterioration of a transmission path of the driving force from the drive unit to the door based on the driving force information obtained in the first acquisition step and the load obtained in the second acquisition step. The state determination program may be stored on a computer-readable storage medium.

As deterioration of the transmission mechanism that transmits the driving force to the door progresses, the load on the transmission mechanism is likely to have a value different from the driving force information regarding the driving force. With the above described program, by obtaining the driving force information and the load on the transmission mechanism, it is possible to determine the state of the transmission mechanism based on the obtained driving force information and the load on the transmission mechanism.

Other aspects and advantages of the present invention will be made apparent from the following description, taken in conjunction with the accompanying drawings, illustrating by way of example the principles of the present invention.

The invention, together with objects and advantages thereof, may best be understood by reference to the following description of the presently preferred embodiments together with the accompanying drawings in which:
Fig. 1 is a front view showing a door device according to a first embodiment of the present invention;
Fig. 2 is a side view showing the door device according to the first embodiment;
Fig. 3 is a block diagram schematically showing the configuration of the door device according to the first embodiment;
Fig. 4 is a flowchart showing steps of a process of determining the state of a transmission mechanism of the door device according to the first embodiment; and
Fig. 5 is a block diagram schematically showing the configuration of a door device according to a third embodiment of the present invention.

### First Embodiment

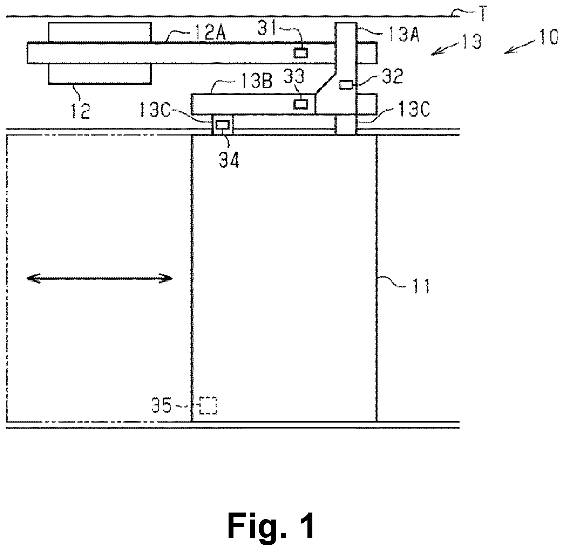

The first embodiment of the present invention will now be described with reference to Figs. 1 to 4.

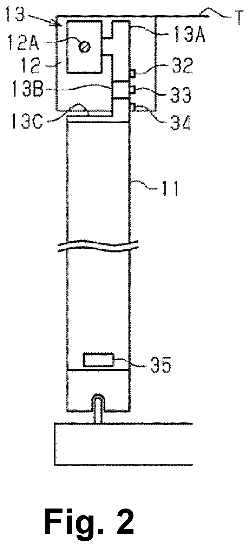

As shown in Figs. 1 and 2, a door device 10 is provided in, for example, a railroad vehicle and includes a door 11, a drive unit 12 that drives the door 11, and a transmission mechanism 13 that transmits a driving force of the drive unit 12 to the door 11. The door 11 is moved to be opened or closed by the driving force of the drive unit 12. The drive unit 12 is an electric motor.

The drive unit 12 reciprocates a piston 12A in an axial direction. The piston 12A extends in a width direction of the door 11. The piston 12A corresponds to an output portion of the drive unit 12. A first coupling member 13A is fixed to an end of the piston 12A, the first coupling member 13A is coupled to the piston 12A and extends in the vertical direction. A second coupling member 13B extending in the width direction of the door 11 is fixed to the first coupling member 13A. A third coupling member 13C is fixed to the second coupling member 13B and to an upper end of the door 11. That is, the transmission mechanism 13 includes the piston 12A, the first coupling member 13A, the second coupling member 13B, and the third coupling member 13C. The element disposed between the drive unit 12 and the door 11 corresponds to the transmission mechanism 13. The first coupling member 13A, the second coupling member 13B, and the third coupling member 13C constitute a bracket connecting the piston 12A and the door 11.

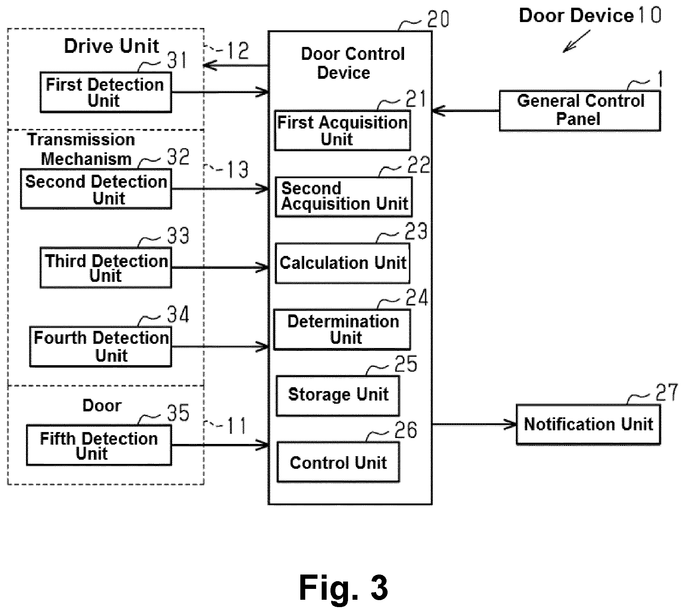

As shown in Fig. 3, the door device 10 includes a door control device 20, which controls the drive unit 12. The door control device 20 opens and closes the door 11 in response to open and close signals respectively, which are control signals output from a general control panel 1 provided in a driver's cab. The door control device 20 may be formed of a processor equipped with, for example, a CPU, a RAM, and a ROM, and performs various processes in accordance with a computer program stored on a computer-readable medium, such as a ROM. One such computer program is a state determination program that determines the state of the transmission mechanism 13 of the door device 10. The door control device 20 determines the state of the transmission mechanism 13 of the door device 10 according to a state determination program stored in a computer-readable medium. In other words, the door control device 20 is a state determination device that determines the state of the transmission mechanism 13 of the door device 10.

The door control device 20 includes a control unit 26 that controls the drive unit 12. The control unit 26 opens and closes the door 11 by outputting a command value for driving the drive unit 12 in a drive direction corresponding to the open signal or the close signal. The control unit 26 supplies, to the drive unit 12, electric power according to a command value relating to the driving force. The driving force output from the drive unit 12 is transmitted to the door 11 via the transmission mechanism 13.

The door control device 20 includes a first acquisition unit 21 for obtaining a command value as driving force information regarding the driving force of the drive unit 12 when the door 11 is driven, and a second acquisition unit 22 for obtaining a load on the transmission mechanism 13 that transmits the driving force of the drive unit 12 to the door 11. The first acquisition unit 21 obtains, from the control unit 26, the command value related to the driving force. The second acquisition unit 22 obtains the loads detected by a first detection unit 31, a second detection unit 32, a third detection unit 33, a fourth detection unit 34, and a fifth detection unit 35. The first to fifth detection units 31 to 35 each include, for example, a strain gauge to detect the load from the strain generated by transmission of the driving force, and output the load to the door control device 20 by wire or wirelessly.

As shown in Figs. 1 and 2, the first detection unit 31 is attached near the tip end of the piston 12A of the drive unit 12. The second detection unit 32 is attached to the first coupling member 13A of the transmission mechanism 13. The third detection unit 33 is attached to the second coupling member 13B of the transmission mechanism 13. The fourth detection unit 34 is attached to the third coupling member 13C of the transmission mechanism 13. The fifth detection unit 35 is attached to a lower side surface of the door 11. The fifth detection unit 35 is able to detect a load at the position farthest from the output of the drive unit 12.

As shown in Fig. 3, the door control device 20 includes a determination unit 24 that determines the state of the transmission mechanism 13 based on the command value obtained by the first acquisition unit 21 and the load obtained by the second acquisition unit 22. The door control device 20 includes a calculation unit 23 that calculates, from the command value obtained by the first acquisition unit 21 and the load obtained by the second acquisition unit 22, a determination value used by the determination unit 24 for determination. The door control device 20 includes a storage unit 25 storing the determination value calculated by the calculation unit 23.

Here, loads detected by the first to fifth detection units 31 to 35 differ depending on the coupling state between the corresponding member to be detected and the other members, the characteristics of the corresponding member, and the like. Thus, outputs are calculated from the loads detected by the first to fifth detection units 31 to 35 considering the characteristics of each member, and the state of the transmission mechanism 13 is determined based on the calculated outputs.

The determination unit 24 determines the state of the transmission mechanism 13 based on the difference between the load based on the command value of the driving force obtained by the first acquisition unit 21 and the load on the transmission path of the driving force that are obtained by the second acquisition unit 22 (hereunder referred to as a determination method A). Specifically, the determination unit 24 determines the state of the transmission mechanism 13 based on a determination value V1 which is hereunder described in detail. The calculation unit 23 calculates the determination value V1 that is used by the determination unit 24 for determination. The determination unit 24 determines that the state of the transmission mechanism 13 is normal when the determination value V1 calculated by the calculation unit 23 falls within a predetermined range. When the determination value V1 is out of the predetermined range, the determination unit 24 determines that there is deterioration in the transmission mechanism 13. The deterioration determined by the determination unit 24 refers to a state shortly before occurrence of a failure that the door 11 is unable to be moved.

### - Determination Value V1

The determination value V1 is defined as a difference between output calculated from the command value of the driving force and output calculated from a load detected by at least one of the first to fifth detection units 31 to 35 provided in the transmission path of the driving force.

The door device 10 includes a notification unit 27 that notifies a result of determination performed by the determination unit 24. Examples of the notification unit 27 include a speaker producing sound, a lamp emitting light, and a display device displaying letters and/or images, and one or more may be selected from among these for a user.

Steps of operation of the door control device 20 configured as described above will be now described with reference to Figs. 1 to 4.

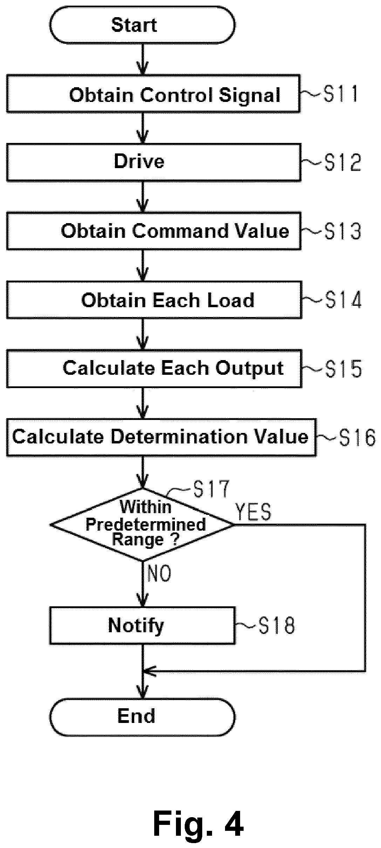

As shown in Fig. 4, the door control device 20 obtains the control signal (step S11). Specifically, in response to the open signal or close signal supplied as the control signal from the general control panel 1, the door control device 20 starts a process to drive the door 11.

The door control device 20 drives the drive unit 12 (step S12). Specifically, the control unit 26 outputs an electric power corresponding to the command value for driving the drive unit 12 in the drive direction corresponding to the open signal or the close signal. The drive unit 12 is driven based on the command value and outputs a driving force through the piston 12A. The driving force is transmitted to the piston 12A, the first coupling member 13A, the second coupling member 13B, the third coupling member 13C, and the door 11 in this stated order. The driving force is transmitted and eventually moves the corresponding door 11. Since the effect of lateral pressure applied to the door 11 may be reduced, the state determination of the transmission mechanism 13 is preferably performed when the door 11 is closed.

The door control device 20 obtains the command value from the control unit 26 (step S13). Specifically, the first acquisition unit 21 obtains the command value output from the control unit 26 when the control unit 26 drives the drive unit 12. Step S13 corresponds to the claimed first acquisition step.

The door control device 20 obtains a load detected by each detection unit (step S14). Specifically, the second acquisition unit 22 obtains loads detected by the first detection unit 31, the second detection unit 32, the third detection unit 33, the fourth detection unit 34, and the fifth detection unit 35. Alternatively, the second acquisition unit 22 may obtain only load(s) necessary for determination. Step S14 corresponds to the claimed second acquisition step.

The door control device 20 calculates each output (step S15). Specifically, the calculation unit 23 calculates output based on the loads obtained by the second acquisition unit 22. Further, the calculation unit 23 calculates output based on the command value obtained by the first acquisition unit 21. The storage unit 25 stores the output that have been calculated by the calculation unit 23 from the loads and the command value.

The door control device 20 calculates a determination value (step S16). Specifically, the calculation unit 23 calculates the determination value V1 by obtaining the difference between the output calculated from the command value of the driving force and the output calculated from the loads on the transmission path of the driving force.

The door control device 20 determines whether the determination value falls within a predetermined range (step S17). If the determination value is large, there is a high possibility of deterioration in the transmission performance of the transmission mechanism 13. Accordingly, the determination unit 24 determines that the transmission mechanism 13 is normal when the determination value is within the predetermined range, and determines that the transmission mechanism 13 is deteriorated when the determination value is out of the predetermined range. Note that step S17 corresponds to the claimed determination step.

When the determination value is within the predetermined range (step S17: YES), the door control device 20 determines that the state of the transmission mechanism 13 is normal, and thus ends the process.

Whereas when the determination value is out of the predetermined range (step S17: NO), the door control device 20 determines that the transmission mechanism 13 has deteriorated, and informs the deterioration (step S18). Specifically, the notification unit 27 informs the deterioration by sound, light, or display.

As described above, the state of the transmission mechanism 13 can be determined by detecting loads on the transmission mechanism 13 of the door device 10, calculating the determination value, and determine whether the determination value is within a predetermined range. In this way, it is possible to detect deterioration before the door 11 actually fails and becomes unable to be moved.

Advantageous effects of the first embodiment will be now described.
(1) By obtaining the command value and the load(s) on the transmission mechanism 13, it is possible to determine the state of the transmission mechanism 13 based on the obtained command value and the obtained load(s) on the transmission mechanism 13.
(2) Since the detection units 32, 33, and 34 are provided on the coupling members 13A, 13B, and 13C of the transmission mechanism 13 that provides the transmission path of the driving force, it is possible to determine whether deterioration has occurred at any point of the transmission path.
(3) Although lateral pressure may be applied to the door 11 when the door 11 is opened, the determination can be performed without the effect of the lateral pressure by performing the determination when the door 11 is closed.

### Second Embodiment

The second embodiment of the present invention will be hereinafter described. In the second embodiment, the method of determining the state of the transmission mechanism 13 of the door device 10 is different from that of the first embodiment. The following description will be focused on the difference from the first embodiment.

The determination unit 24 determines the state of the transmission mechanism 13 based on the difference between an upstream load and a downstream load on the driving force transmission path that are obtained by the second acquisition unit 22 (hereunder referred to as a determination method B). Specifically, the determination unit 24 determines the state of the transmission mechanism 13 based on at least one of determination values V2 to V4, which are hereunder described in detail. The calculation unit 23 calculates the determination values V2 to V4 used by the determination unit 24 for determination. The determination unit 24 determines that the state of the transmission mechanism 13 is normal when the determination values V2 to V4 calculated by the calculation unit 23 fall within a predetermined range. When the determination values V2 to V4 are out of the predetermined range, the determination unit 24 determines that there is deterioration in the transmission mechanism 13. The deterioration determined by the determination unit 24 refers to a state shortly before occurrence of a failure that the door 11 is unable to be moved.

### - Determination Value V2

The determination value V2 is defined as a difference between output calculated from a load detected by the first detection unit 31, which is situated upstream of the driving force transmission path, and output calculated from a load detected by at least one of the second to fifth detection units 32 to 35, which are situated downstream of the driving force transmission path. The load detected by the first detection unit 31 corresponds to the claimed load at a portion where directly receives the driving force of the drive unit, and the load detected by at least one of the second to fifth detection units 32 to 35 corresponds to the claimed load at a portion of the transmission path of the driving force other than the portion where directly receives the driving force.

### - Determination Value V3

The determination value V3 is defined as a difference between output calculated from a load detected by the second detection unit 32, which is situated upstream of the driving force transmission path, and output calculated from a load detected by at least one of the third to fifth detection units 33 to 35, which are situated downstream of the driving force transmission path.

### - Determination Value V4

The determination value V4 is defined as a difference between output calculated from a load detected by the third detection unit 33, which is situated upstream of the driving force transmission path, and output calculated from a load detected by at least one of the fourth and fifth detection units 34 and 35, which are situated downstream of the driving force transmission path.

Alternatively, the determination unit 24 determines the state of the transmission mechanism 13 based on a change in load on the driving force transmission path obtained at the same location by the second acquisition unit 22 (hereunder referred to as a determination method C). Specifically, the determination unit 24 determines the state of the transmission mechanism 13 based on a determination value V5, which is hereunder described in detail. The calculation unit 23 calculates the determination value V5 used by the determination unit 24 for determination. The determination unit 24 determines that the state of the transmission mechanism 13 is normal when the determination value V5 calculated by the calculation unit 23 falls within a predetermined range. When the determination value V5 is out of the predetermined range, the determination unit 24 determines that there is deterioration in the transmission mechanism 13. The deterioration determined by the determination unit 24 refers to a state shortly before occurrence of a failure that the door 11 is unable to be moved.

### - Determination Value V5

The determination value V5 is defined as a difference between output calculated from a load that has been previously detected by one of the first to fifth detection units 31 to 35 and output calculated from a load that is currently detected by the detection unit. The output calculated from the previous load is stored in the storage unit 25.

Alternatively, the determination unit 24 determines the state of the transmission mechanism 13 based on loads on the driving force transmission path obtained at the same location by the second acquisition unit 22 under the same conditions (hereunder referred to as a determination method D). Specifically, the determination unit 24 determines the state of the transmission mechanism 13 based on a determination value V6, which is hereunder described in detail. The calculation unit 23 calculates the determination value V6 used by the determination unit 24 for determination. The determination unit 24 determines that the state of the transmission mechanism 13 is normal when the determination value V6 calculated by the calculation unit 23 falls within a predetermined range. When the determination value V6 is out of the predetermined range, the determination unit 24 determines that there is deterioration in the transmission mechanism 13. The deterioration determined by the determination unit 24 refers to a state shortly before occurrence of a failure that the door 11 is unable to be moved.

The same condition stated above specifically means that no lateral pressure is applied to the door 11, in other words, no passengers are on the railway vehicle T, and the temperature is the same. The determination unit 24 determines whether any passengers are on board, that is, whether no lateral pressure is applied to the door 11 by obtaining information on a load applied to an air spring from the general control panel 1. Further, the determination unit 24 determines whether or not the temperature is the same by obtaining the temperature information from the general control panel 1 or a temperature sensor attached to the railway vehicle T.

### - Determination Value V6

The determination value V6 is defined as a difference between output calculated from a load that is currently detected by one of the first to fifth detection units 31 to 35 and output calculated from a load that has been previously detected by the detection unit under the same conditions as the current load. The output calculated from the previous load is stored in the storage unit 25.

Steps of operation of the door control device 20 configured as described above will be now described.

As shown in Fig. 4, steps S11 to S15 and steps S17 to S18 are performed in the same manner as in the first embodiment. In step S16, the calculation of a determination value by the door control device 20 is performed by the calculation unit 23 obtaining the differences among outputs calculated from loads on the driving force transmission path.

Specifically, in the determination method B, the calculation unit 23 calculates at least one of the determination values V2 to V4 by respectively obtaining the difference between output calculated from an upstream load and output calculated from a downstream load in the driving force transmission path. In the determination method C, the calculation unit 23 calculates the determination value V5 by obtaining the difference between output calculated from a previous load and output calculated from a current load at the same location. In the determination method D, the calculation unit 23 calculates the determination value V6 by obtaining the difference between output calculated from a previous load and output calculated from a current load at the same location under the same conditions.

As described above, the state of the transmission mechanism 13 can be determined by detecting loads on the transmission mechanism 13 of the door device 10, calculating the determination value, and determine whether the determination value is within a predetermined range. In this way, it is possible to detect deterioration before the door 11 actually fails and becomes unable to be moved.

Advantageous effects of the second embodiment will be now described. The following advantageous effects can be obtained in addition to the advantageous effects (2) and (3) of the first embodiment.

(4) By obtaining the difference between the upstream load and the downstream load in the driving force transmission path, it is possible to determine whether the transmission path of the transmission mechanism 13 is deteriorated. Further, by narrowing the distance between the upstream load detection position and the downstream load detection position, it is possible to identify a deteriorated portion.

(5) By obtaining the difference between the load based on the input of the driving force and the load on the driving force transmission path, it is possible to determine whether the transmission path of the transmission mechanism 13 is deteriorated. Further, since the input can be used as a reference, the determination can be made according to the change in load generated by the input.

(6) It is possible to determine whether there is deterioration of the transmission path of the transmission mechanism 13 in consideration of change in load at the same location, that is, the change over time. By obtaining the change in load at the same location, it is possible to determine whether there is deterioration at that location.

(7) It is possible to determine whether there is deterioration of the transmission path of the transmission mechanism 13 by obtaining a change in load at the same location under the same conditions, that is, the change overtime and the load under the same conditions.

### Third Embodiment

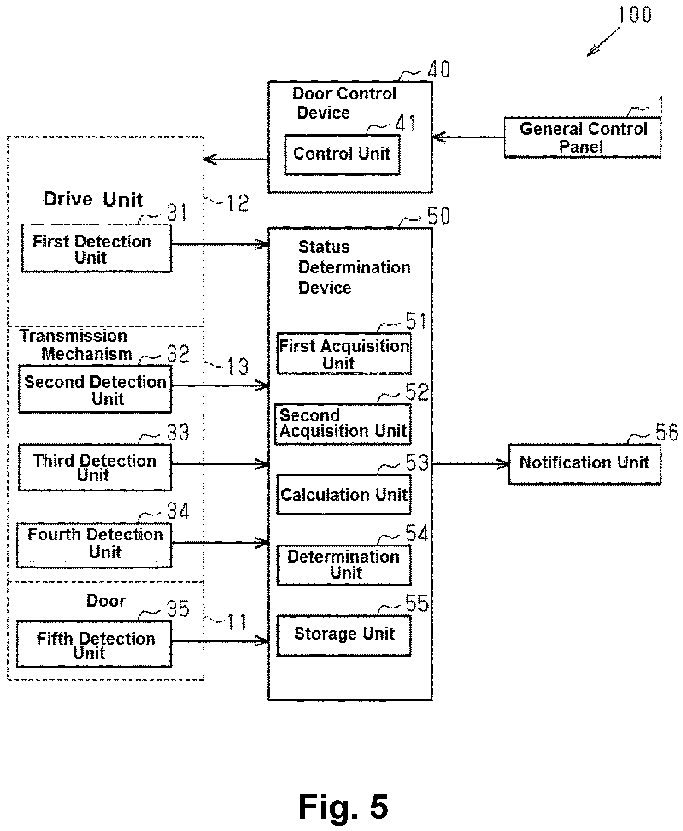

The third embodiment of the present invention will now be described with reference to Fig. 5. The third embodiment is different from the first embodiment in that the state determination device is provided separately from the door control device. The following description will be focused on the difference from the first embodiment.

As shown in Fig. 5, a door device 100 includes a door control device 40, which controls the drive unit 12, and a state determination device 50 that determines the state of the transmission mechanism 13 of the door device 100. The door control device 40 opens and closes the door 11 in response to open and close signals respectively, which are control signals output from a general control panel 1 provided in a driver's cab.

The door control device 40 includes a control unit 41 that controls the drive unit 12. Similar to the control unit 26 of the first embodiment, the control unit 41 opens and closes the door 11 by outputting a drive signal for driving the drive unit 12 in a drive direction corresponding to the open signal or the close signal. The driving force output from the drive unit 12 is transmitted to the door 11 via the transmission mechanism 13.

The state determination device 50 includes a first acquisition unit 51 for obtaining a command value as driving force information regarding the driving force of the drive unit 12 when the door 11 is driven, and a second acquisition unit 52 for obtaining a load on the transmission mechanism 13 that transmits the driving force of the drive unit 12 to the door 11. The first acquisition unit 51 obtains, from the control unit 41, the command value related to the driving force. Similar to the second acquisition unit 22 of the first embodiment, the second acquisition unit 52 obtains loads detected by the first detection unit 31, the second detection unit 32, the third detection unit 33, the fourth detection unit 34, and the fifth detection unit 35.

The state determination device 50 includes a determination unit 54 similar to the determination unit 24 of the first embodiment, which determines the state of the transmission mechanism 13 based on the load obtained by the second acquisition unit 52. The state determination device 50 further includes a calculation unit 53 similar to the calculation unit 23 of the first embodiment, which calculates, from the load obtained by the second acquisition unit 52, a determination value used by the determination unit 54 for determination. The state determination device 50 includes a storage unit 55 similar to the storage unit 25 of the first embodiment, which stores the determination value calculated by the calculation unit 53. The door device 100 includes a notification unit 56 similar to the notification unit 27 of the first embodiment, which notifies a result of determination performed by the determination unit 54.

As described above, even when the state determination device 50 is provided separately from the door control device 40, the state determination device 50 is able to determine the state of the transmission mechanism 13.

According to the third embodiment, the advantageous effects (1) to (7) of the first and second embodiments are obtained.

### Other Embodiments

The foregoing embodiments may be modified as described below. The above embodiments and the following modifications may be combined with each other to such an extent that they are technically consistent with each other.
- In each of the above embodiments, the state of the transmission mechanism 13 is determined when the door 11 is closed. However, the state of the transmission mechanism 13 may be determined not only when the door 11 is closed but also when the door 11 is opened.
- In each of the above embodiments, the state of the transmission mechanism 13 may be determined by a method combining the determination methods A to D.
- In each of the above embodiments, the loads are detected by the first to fifth detection units 31 to 35. Alternatively, in the determination method A, the state of the transmission mechanism 13 may be determined based on at least two detection results obtained from two of the first to fifth detection units 31 to 35. Alternatively, in the determination method B, the state of the transmission mechanism 13 may be determined based on the detection result obtained from the first detection unit 31 and at least one detection result obtained from one of the second to fifth detection units 32 to 35. Alternatively, in the determination method C or D, the state of the transmission mechanism 13 may be determined based on at least one detection result obtained from one of the first to fifth detection units 31 to 35.
- In each of the above embodiments, the state of the drive unit 12 may be determined based on the results of detection performed by the first detection unit 31. For example, the state of the drive unit 12 can be determined by comparing the control of the control unit 26 or 41 with the detection results or the driving force.
- In each of the above embodiments, the state of the door 11 may be determined based on the results of detection performed by the fifth detection unit 35. For example, the state of the door 11 can be determined by comparing the control of the control unit 26 or 41 with the detection results or the driving force.
- In each of the above embodiments, the positions to attach the detection units and the number of the detection units may be adequately selected. Specifically, the number of the detection units and the positions to attach the detection units may be adequately selected according to the configuration and shape of the transmission mechanism.
- In the third embodiment, the result of the determination performed by the state determination device 50 may be output to the door control device 40, the door control device 40 that has obtained the determination result may notify the determination result or output the determination result to the general control panel 1.
- In each of the above embodiments, the door device 10 or 100 may be a first door device 10 or 100 that is one of a plurality of door devices provided in a same vehicle. The second acquisition unit 22 or 52 may also obtain a load on a transmission mechanism of a second door device that is another one of the door devices. The determination unit 24 or 54 may determine the state of the transmission mechanism 13 of the first door device 10, 100 based on the load on the transmission mechanism 13 of the first door device 10, 100 and the load on the transmission mechanism of the second door device that are obtained by the second acquisition unit 22 or 52. The state of the transmission mechanism 13 is determined by calculating output from the load to obtain a determination value by the calculation unit 23 or 53, and determining whether the determination value is within a predetermined range. According to such a configuration, the state of the transmission mechanism 13 can be determined by comparing the load on the transmission mechanism 13 of the first door device 10 or 100 with the load on the transmission mechanism of the second door device.
- In each of the above embodiments, the drive unit 12 is an electric motor. Alternatively, the drive unit driving the door 11 may be an air cylinder. In the case of an air cylinder, an input air pressure and an output air pressure are measured to calculate the driving force. Further, the control unit controls the supply and discharge of air pressure according to a command value for driving the air cylinder in the drive direction corresponding to the open signal or the close signal.
- The determination process in each of the above embodiments may be performed when the railway vehicle is in a shed or before operation. In this way, the state of the transmission mechanism can be determined before the operation of the railway vehicle.

The present disclosure also encompasses
a door device (10; 100) that includes a door (11), a drive unit (12) driving the door (11), and a transmission mechanism (13) transmitting a driving force of the drive unit (12) to the door (11), and a state determination device as described above.

## Claims

1. A device comprising:
a drive unit (12) configured to drive a door (11);
a transmission mechanism (13) that transmits a driving force of the drive unit (12) to the door (11); and
a state determination device (20; 50), comprising:
a first acquisition unit (21; 51) obtaining driving force information regarding the driving force of the drive unit (12);
a second acquisition unit (22; 52) obtaining a load on the transmission mechanism (13); and
a determination unit (24; 54) determining whether there is deterioration of a transmission path of the driving force from the drive unit (12) to the door (11) based on the driving force information obtained by the first acquisition unit (21; 51) and the load obtained by the second acquisition unit (22; 52).

2. The device according to claim 1, wherein the determination unit (24; 54) determines whether there is deterioration of the transmission path of the driving force based on the difference between an upstream load obtained by the second acquisition unit (22; 52) upstream of the transmission path of the driving force and a downstream load obtained by the second acquisition unit (22; 52) downstream of the transmission path of the driving force.

3. The device according to claim 1, wherein the determination unit (24; 54) determines whether there is deterioration of the transmission path of the driving force based on the difference between a load at a portion of the transmission path of the driving force where the driving force is directly received from the drive unit (12) and a load at a portion of the transmission path of the driving force other than the portion where the driving force is directly received from the drive unit (12).

4. The device according to claim 1, wherein the determination unit (24; 54) determines whether there is deterioration of the transmission path of the driving force based on the difference between outputs calculated from a currently obtained load and a previously obtained load obtained at a same location of the transmission path of the driving force by the second acquisition unit (22; 52).

5. The device according to claim 1, wherein the determination unit (24;54) determines whether there is deterioration of the transmission path of the driving force based on the difference between outputs calculated from a currently obtained load and a previously obtained load at a same location of the transmission path of the driving force by the second acquisition unit (22; 52) under same conditions.

6. The device according to any one of claims 1 to 5, wherein a detection unit (31, 32, 33, 34, 35) detecting the load is provided on each of an output portion (12A) of the drive unit (12), a coupling member (13A, 13B, 13C) forming a part of the transmission mechanism (13) and connecting the output portion (12A) and the door (11), and the door (11).

7. The device according to any one of claims 1 to 6, wherein the determination unit (24; 54) determines whether there is deterioration of the transmission path of the driving force when the door (11) is closed.

8. The device according to claim 1, wherein
the door (11) is a first door (11) that is one of a plurality of doors provided in a same vehicle,
the second acquisition unit (22; 52) also obtains a load on a transmission mechanism that transmits a driving force to a second door that is another one of the plurality of doors, and
the determination unit (24; 54) determines whether there is deterioration of the transmission path of the driving force to the first door (11) based on the load on the transmission mechanism (13) transmitting the driving force to the first door (11) and the load on the transmission mechanism transmitting the driving force to the second door that are obtained by the second acquisition unit (22; 52).

9. The device according to any one of claims 1 to 8, wherein the state determination device (20) further comprises a control unit (26) controlling the drive unit (12).

10. A state determination method, comprising
a first acquisition step of obtaining driving force information regarding a driving force of a drive unit (12) that drives a door (11);
a second acquisition step of obtaining a load on a transmission mechanism (13) that transmits the driving force of the drive unit (12) to the door (11); and
a determination step of determining whether there is deterioration of a transmission path of the driving force from the drive unit (12) to the door (11) based on the driving force information obtained in the first acquisition step and the load obtained in the second acquisition step.

11. A state determination program, causing a computer to perform
a first acquisition step of obtaining driving force information regarding a driving force of a drive unit (12) that drives a door (11);
a second acquisition step of obtaining a load on a transmission mechanism (13) that transmits the driving force of the drive unit (12) to the door (11); and
a determination step of determining whether there is deterioration of a transmission path of the driving force from the drive unit (12) to the door (11) based on the driving force information obtained in the first acquisition step and the load obtained in the second acquisition step.

12. A computer-readable medium storing the state determination program according to claim 11.

## Patentansprüche

1. Eine Vorrichtung, umfassend:
eine Antriebseinheit (12), die konfiguriert ist, eine Tür (11) anzutreiben;
einen Übertragungsmechanismus (13), der eine Antriebskraft der Antriebseinheit (12) an die Tür (11) überträgt; und
eine Zustandsbestimmungsvorrichtung (20; 50), umfassend:
eine erste Erfassungseinheit (21; 51), die Antriebskraftinformationen bezüglich der Antriebskraft der Antriebseinheit (12) erhält;
eine zweite Erfassungseinheit (22; 52), die eine Last an dem Übertragungsmechanismus (13) erhält; und
eine Bestimmungseinheit (24; 54), die basierend auf der von der ersten Erfassungseinheit (21; 51) erhaltenen Antriebskraftinformation und der von der zweiten Erfassungseinheit (22; 52) erhaltenen Last bestimmt, ob es Verschlechterung eines Übertragungswegs der Antriebskraft von der Antriebseinheit (12) an die Tür (11) gibt.

2. Die Vorrichtung nach Anspruch 1, wobei die Bestimmungseinheit (24; 54) basierend auf dem Unterschied zwischen einer von der zweiten Erfassungseinheit (22; 52) stromaufwärts des Übertragungsweges der Antriebskraft erhaltenen stromaufwärtigen Last und einer von der zweiten Erfassungseinheit (22; 52) stromabwärts des Übertragungsweges der Antriebskraft erhaltenen stromabwärtigen Last bestimmt, ob es Verschlechterung des Übertragungsweges der Antriebskraft gibt.

3. Die Vorrichtung nach Anspruch 1, wobei die Bestimmungseinheit (24; 54) basierend auf dem Unterschied zwischen einer Last an einem Abschnitt des Übertragungsweges der Antriebskraft, an dem die Antriebskraft direkt von der Antriebseinheit (12) empfangen wird, und einer Last an einem anderen Abschnitt des Übertragungsweges der Antriebskraft als dem Abschnitt, an dem die Antriebskraft direkt von der Antriebseinheit (12) empfangen wird, bestimmt, ob es Verschlechterung des Übertragungsweges der Antriebskraft gibt,

4. Die Vorrichtung nach Anspruch 1, wobei die Bestimmungseinheit (24; 54) basierend auf dem Unterschied zwischen Ausgaben, die aus einer aktuell erhaltenen Last und einer zuvor erhaltenen Last berechnet werden, die an einer selben Stelle des Übertragungsweges der Antriebskraft durch die zweite Erfassungseinheit (22; 52) erhalten werden, bestimmt, ob es Verschlechterung des Übertragungsweges der Antriebskraft gibt.

5. Die Vorrichtung nach Anspruch 1, wobei die Bestimmungseinheit (24; 54) basierend auf dem Unterschied zwischen Ausgaben, die, aus einer aktuell erhaltenen Last und einer zuvor erhaltenen Last an einer selben Stelle des Übertragungsweges der Antriebskraft unter gleichen Bedingungen durch die zweite Erfassungseinheit (22; 52), berechnet werden, bestimmt, ob es Verschlechterung des Übertragungsweges der Antriebskraft gibt.

6. Die Vorrichtung nach irgendeinem der Ansprüche 1 bis 5, wobei eine Detektionseinheit (31, 32, 33, 34, 35), die die Last detektiert, an jedem von einem Ausgangsabschnitt (12A) der Antriebseinheit (12), einem Kopplungselement (13A, 13B, 13C), das einen Teil des Übertragungsmechanismus (13) bildet und den Ausgangsabschnitt (12A) und die Tür (11) verbindet, und der Tür (11) vorgesehen ist.

7. Die Vorrichtung nach irgendeinem der Ansprüche 1 bis 6, wobei die Bestimmungseinheit (24; 54) bestimmt, ob es Verschlechterung des Übertragungsweges der Antriebskraft vorliegt, wenn die Tür (11) geschlossen ist.

8. Die Vorrichtung nach Anspruch 1, wobei
die Tür (11) eine erste Tür (11) ist, die eine von einer Vielzahl von Türen ist, die in einem selben Fahrzeug vorgesehen sind,
die zweite Erfassungseinheit (22; 52) auch eine Last an einem Übertragungsmechanismus erhält, der eine Antriebskraft an eine zweite Tür überträgt, die eine andere aus der Vielzahl von Türen ist, und
die Bestimmungseinheit (24; 54) bestimmt, ob es Verschlechterung des Übertragungsweges der Antriebskraft zu der ersten Tür (11) gibt, basierend auf der Last des Übertragungsmechanismus (13), der die Antriebskraft an die erste Tür (11) überträgt, und der Last des Übertragungsmechanismus, der die Antriebskraft an die zweite Tür überträgt, die durch die zweite Erfassungseinheit (22; 52) erhalten werden.

9. Die Vorrichtung nach irgendeinem der Ansprüche 1 bis 8, wobei die Zustandsbestimmungsvorrichtung (20) ferner eine Steuereinheit (26) umfasst, die die Antriebseinheit (12) steuert.

10. Ein Zustandsbestimmungsverfahren, umfassend
einen ersten Erfassungsschritt des Erhaltens von Antriebskraftinformationen bezüglich einer Antriebskraft einer Antriebseinheit (12), die eine Tür (11) antreibt;
einen zweiten Erfassungsschritt des Erhaltens einer Last an einem Übertragungsmechanismus (13), der die Antriebskraft der Antriebseinheit (12) an die Tür (11) überträgt; und
einen Bestimmungsschritt des Bestimmens, ob es Verschlechterung eines Übertragungsweges der Antriebskraft von der Antriebseinheit (12) an die Tür (11) gibt, basierend auf der Antriebskraftinformation, die in dem ersten Erfassungsschritt erhalten wurde, und der Last, die in dem zweiten Erfassungsschritt erhalten wurde.

11. Ein Zustandsbestimmungsprogramm, das einen Computer veranlasst, durchzuführen:
einen ersten Erfassungsschritt des Erhaltens von Antriebskraftinformation bezüglich einer Antriebskraft einer Antriebseinheit (12), die eine Tür (11) antreibt;
einen zweiten Erfassungsschritt des Erhaltens einer Last an einem Übertragungsmechanismus (13), der die Antriebskraft der Antriebseinheit (12) an die Tür (11) überträgt; und
einen Bestimmungsschritt des Bestimmens, ob es Verschlechterung eines Übertragungswegs der Antriebskraft von der Antriebseinheit (12) an die Tür (11) gibt, basierend auf der Antriebskraftinformation, die in dem ersten Erfassungsschritt erhalten wurde, und der Last, die in dem zweiten Erfassungsschritt erhalten wurde.

12. Ein computerlesbares Medium, das das Zustandsbestimmungsprogramm nach Anspruch 11 speichert.

## Revendications

1. Dispositif comprenant :
une unité d'entraînement (12) configurée pour entraîner une porte (11) ;
un mécanisme de transmission (13) qui transmet une force d'entraînement de l'unité d'entraînement (12) à la porte (11) ; et
un dispositif de détermination d'état (20 ; 50), comprenant :
une première unité d'acquisition (21 ; 51) obtenant des informations de force d'entraînement relatives à la force d'entraînement de l'unité d'entraînement (12) ;
une deuxième unité d'acquisition (22 ; 52) obtenant une charge sur le mécanisme de transmission (13) ; et
une unité de détermination (24 ; 54) déterminant la présence ou non d'une détérioration d'un trajet de transmission de la force d'entraînement de l'unité d'entraînement (12) à la porte (11) selon les informations de force d'entraînement obtenues par la première unité d'acquisition (21 ; 51) et la charge obtenue par la deuxième unité d'acquisition (22 ; 52).

2. Le dispositif selon la revendication 1, dans lequel l'unité de détermination (24 ; 54) détermine la présence ou non d'une détérioration du trajet de transmission de la force d'entraînement selon la différence entre une charge amont obtenue par la deuxième unité d'acquisition (22 ; 52) en amont du trajet de transmission de la force d'entraînement et une charge aval obtenue par la deuxième unité d'acquisition (22 ; 52) en aval du trajet de transmission de la force d'entraînement.

3. Le dispositif selon la revendication 1, dans lequel l'unité de détermination (24 ; 54) détermine la présence ou non d'une détérioration du trajet de transmission de la force d'entraînement selon la différence entre une charge au niveau d'une partie du trajet de transmission de la force d'entraînement où la force d'entraînement est directement reçue de l'unité d'entraînement (12) et une charge au niveau d'une partie du trajet de transmission de la force d'entraînement autre que la partie où la force d'entraînement est directement reçue de l'unité d'entraînement (12).

4. Le dispositif selon la revendication 1, dans lequel l'unité de détermination (24 ; 54) détermine la présence ou non d'une détérioration du trajet de transmission de la force d'entraînement selon la différence entre des sorties calculées à partir d'une charge couramment obtenue et d'une charge antérieurement obtenue obtenues au niveau d'un même emplacement du trajet de transmission de la force d'entraînement par la deuxième unité d'acquisition (22 ; 52).

5. Le dispositif selon la revendication 1, dans lequel l'unité de détermination (24 ; 54) détermine la présence ou non d'une détérioration du trajet de transmission de la force d'entraînement selon la différence entre des sorties calculées à partir d'une charge couramment obtenue et d'une charge antérieurement obtenue au niveau d'un même emplacement du trajet de transmission de la force d'entraînement par la deuxième unité d'acquisition (22 ; 52) dans les mêmes conditions.

6. Le dispositif selon l'une quelconque des revendications 1 à 5, dans lequel une unité de détection (31, 32, 33, 34, 35) détectant la charge est disposée sur chacun d'une partie de sortie (12A) de l'unité d'entraînement (12), d'un élément de couplage (13A, 13B, 13C) constituant une partie du mécanisme de transmission (13) et connectant la partie de sortie (12A) et la porte (11), et de la porte (11).

7. Le dispositif selon l'une quelconque des revendications 1 à 6, dans lequel l'unité de détermination (24 ; 54) détermine la présence ou non d'une détérioration du trajet de transmission de la force d'entraînement lorsque la porte (11) est fermée.

8. Le dispositif selon la revendication 1, dans lequel
la porte (11) est une première porte (11) qui est une d'une pluralité de portes disposées dans un même véhicule,
la deuxième unité d'acquisition (22 ; 52) obtient également une charge d'un mécanisme de transmission qui transmet une force d'entraînement à une deuxième porte qui est une autre de la pluralité de portes, et
l'unité de détermination (24 ; 54) détermine la présence ou non d'une détérioration du trajet de transmission de la force d'entraînement à la première porte (11) selon la charge sur le mécanisme de transmission (13) transmettant la force d'entraînement à la première porte (11) et la charge sur le mécanisme de transmission transmettant la force d'entraînement à la deuxième porte qui sont obtenues par la deuxième unité d'acquisition (22 ; 52).

9. Le dispositif selon l'une quelconque des revendications 1 à 8, dans lequel le dispositif de détermination d'état (20) comprend en outre une unité de commande (26) commandant l'unité d'entraînement (12).

10. Procédé de détermination d'état, comprenant
une première étape d'acquisition d'obtention d'informations de force d'entraînement relatives à une force d'entraînement d'une unité d'entraînement (12) qui entraîne une porte (11) ;
une deuxième étape d'acquisition d'obtention d'une charge sur un mécanisme de transmission (13) qui transmet une force d'entraînement de l'unité d'entraînement (12) à la porte (11) ; et
une unité de détermination de détermination de la présence ou non d'une détérioration d'un trajet de transmission de la force d'entraînement de l'unité d'entraînement (12) à la porte (11) selon les informations de force d'entraînement obtenues à la première étape d'acquisition et la charge obtenue à la deuxième étape d'acquisition.

11. Programme de détermination d'état, faisant exécuter à un ordinateur
une première étape d'acquisition d'obtention d'informations de force d'entraînement relatives à une force d'entraînement d'une unité d'entraînement (12) qui entraîne une porte (11) ;
une deuxième étape d'acquisition d'obtention d'une charge sur un mécanisme de transmission (13) qui transmet une force d'entraînement de l'unité d'entraînement (12) à la porte (11) ; et
une étape de détermination de détermination de la présence ou non d'une détérioration d'un trajet de transmission de la force d'entraînement de l'unité d'entraînement (12) à la porte (11) selon les informations de force d'entraînement obtenues à la première étape d'acquisition et la charge obtenue à la deuxième étape d'acquisition.

12. Support lisible par un ordinateur stockant le programme de détermination d'état selon la revendication 11.
